# EUROPEAN PATENT APPLICATION

(11) **EP 4 295 809 A1**
(43) Date of publication of application: **27.12.2023**
(21) Application number: 23020268.1
(22) Date of filing: 30.05.2023
(51) Int. Cl.: A61C 8/00

(54) **OROANTRAL PROSTHETIC ATTACHMENT**

(30) Priority: 21.06.2022 MX 2022007802
(71) Applicant: Meneses Rosas, Guadalupe Enrique, 06100 Ciudad de México (MX)
(72) Inventor: Meneses Rosas, Guadalupe Enrique, 06100 Ciudad de México (MX)
(74) Representative: Polo Flores, Luis Miguel

(57) **Abstract**

An Oroantral Prosthetic Attachment placed in the remaining bone to anchor in the antral zone of the paranasal sinuses using the internal cortical of the paranasal sinuses and the external cortical of the crestal zone is described. This makes the implant not to migrate to the paranasal sinuses since a supreme anchorage is performed compacting the bone with no injury, and avoids previous bone regeneration surgeries in the paranasal sinuses.

## Description

### Technical field of invention

The present invention is related to the rehabilitation and restitution of the bone structural loss in the paranasal sinuses area, so that the loss of teeth, premolars and molars in both quadrants of the upper jaw can be rehabilitated, despite the severe collapse of bone structures, using the remaining bone to anchor in the antral area of the paranasal sinuses, using the internal cortical of paranasal sinuses and the external cortical of crestal area.

### Invention background

For thousands of years, humanity has sought to solve the need to recover the function and restitution of lost organs, developing innovative techniques and designs to supplement their life quality.

Dental implants are small pieces, usually made of titanium, that replace natural tooth roots. The discovery that titanium osseointegrated into the bone was a serendipity case (a lucky and unexpected discovery or finding).

It is worth mentioning that from this event to the present day, dental implant design has not changed, taking the mechanical principle of a cylindrical and conical metric thread lag-screw.

The benefit of this technology has had an absolute high impact regarding the quality of life, aesthetics, phonetics, self-esteem, digestion, and psyche of people, extending itself to the animal kingdom.

Before dental implants existed, dental rehabilitation was invariably performed in two ways: Removable prosthesis which, because they do not remain fixed in the mouth, become an invasive appliance to soft tissues (causing gum inflammation), hard tissues (causing bone loss), and teeth or molars where they are attached by means of clasps. Over time, all this together causes loss of vertical and horizontal dimension. With these appliances, the individual's esthetics, phonation, and digestion are compromised. Fixed prosthesis whose main disadvantage consists in lowering and carving adjacent pieces, that is to say, the dental pieces that will serve as anchorage to support one or more missing teeth.

Dental implants consist of placing a titanium root inside the bone, similar to a pin or screw by means of a surgical procedure.

The missing piece or pieces are anchored to the implant, completely avoiding the invasive circumstances of the aforementioned treatments. There are determining factors that prevent this type of treatment from being accessible to most of world's population.

The product becomes more expensive because it is managed as a state-of-the-art technology by the manufacturing countries, with an exaggerated price for the use of foreign patents, and countries like ours depend 100 % on these companies, affecting the country's economy due to its importation.

Another factor would be implantology learning curve, since the practice of this specialty requires, in addition to a high academic knowledge, a skill to be developed because it is a design (the of the screw or pin) to be placed in a bone (living tissue) to achieve a primary stability (supreme anchorage) to ensure the success of the surgery.

At present, placing dental implants in the upper jaw and/or specifically in the paranasal sinus area when the patient has already lost teeth (premolars and molars) in one or both sides of the upper jaw for a long period of time, becomes a series of surgeries that requires the professional technical, surgical and academic knowledge beyond those common of general dentists, giving this practice a place within the advanced implantology.

Regarding the patient, all this results in onerous economic expenses, a series of postoperative care, and a complicated recovery period, with a noticeable decrease in the quality of life; without forgetting the series of postoperative care.

We must add the risk, which is undoubtedly the most important fact that exists (with a series of postoperative care and onerous financial expenses) that at some point the osseointegration of the implant or implants may fail and lead to fibrosis, that in place of osseointegration and, due to controlled and uncontrolled factors, the implant migrates into the sinus cavity or sinus antrum, this being extremely invasive, complicated and dangerous, which requires the intervention of different professionals such as maxillofacial, otorhinolaryngologist, and to hospitalize the patient for a major surgery, general anesthesia, operating room, recovery on the floor, etc.

### Brief description of the invention

Rehabilitation of bone loss and bone structure in people requires different implant surgical techniques in wide skeletal extensions. The present invention relates to such techniques and directly to the fixation and anchorage of prostheses in the upper jaw.

The present invention is related to the rehabilitation and restitution of the bone structural loss in the paranasal sinuses area, so that the loss of teeth, premolars, and molars in both quadrants of the upper jaw can be rehabilitated, despite the severe collapse of bone structures, using the remaining bone to anchor in the antral area of the paranasal sinuses.

It is worth mentioning that this design proposed for the present application will avoid the worrying fact of the accidentally dental implant migration to the paranasal sinuses, and at the same time make the placement of such attachments more friendly and less invasive, avoiding the two surgeries that are currently required for the rehabilitation of such segments.

The proposed design breaks with the universal paradigm of dental implants, because since their discovery until today, no substantial changes have been made.

### Brief description of drawings

In order that the invention may be better understood, there is a description below of the currently preferred embodiments of the invention, in which reference will be made to the attached drawings, which are an integral part of the present descriptive memory, and in which:
Figure 1 is a view of the assembly with the clamping screw and the anchor of the Oroantral Prosthetic Attachment of the present invention.
Figure 2 is a view of the clamping screw of the present invention.
Figure 3 is a perspective view of the anchor of the present invention.
Figure 4 is a view of the clamping nut of the present invention.
Figure 5 is a view of the plug screw and truncated cone of the present invention.

### Preferred embodiment of the invention

This invention is described based on a preferred embodiment of the Oroantral Prosthetic Attachment in which:
It is to be understood that the invention is not limited in its application to the construction details and component arrangement set forth in the accommodation presentation and illustrated in the drawings.

It is noted, unless otherwise provided, that all technical or scientific terms used herein have the same meaning as commonly held by persons having knowledge of the arts of the invention. The methods and examples provided herein are illustrative and are not intended to be limiting.

### Proffered embodiment

As can be seen in the Figures, the Oroantral Prosthetic Attachment is made up of the following elements; the clamping screw (1), the anchor (2), the clamping nut (3), plug screw (4) and the truncated cone (5).

The Oroantral Prosthetic Attachment is placed in the remaining bone to anchor in the antral zone of the paranasal sinuses using the internal cortical of the paranasal sinuses and the external cortical of the crestal zone. This makes the implant not to migrate to the paranasal sinuses and the saving of previous bone regeneration surgeries in the paranasal sinuses.

Each one of the constituent elements of the Oroantral Prosthetic Attachment is illustrated in one or more of the figures of the drawings and will be described in the following.

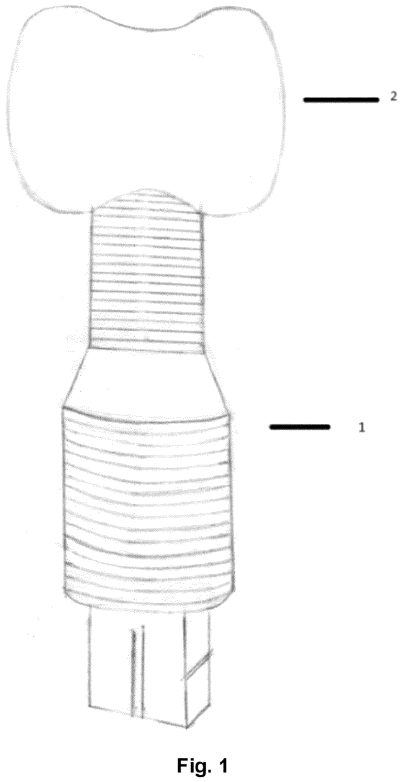

In relation to figure 1, the implant or prosthetic attachment of the invention is formed by a first cylindrical body, the clamping screw (1) with a flat tip, and the body of the prosthetic attachment of the invention is provided with a millimetric thread in the upper part where the anchor (2) is assembled or screwed, then a widening that will serve for the protection of the external cortical of the crestal zone continuing with millimetric thread appears, then in the inferior end a cubic body with laser-marked vertical and horizontal markings that help to the proper placement of the Oroantral Prosthetic Attachment appears.

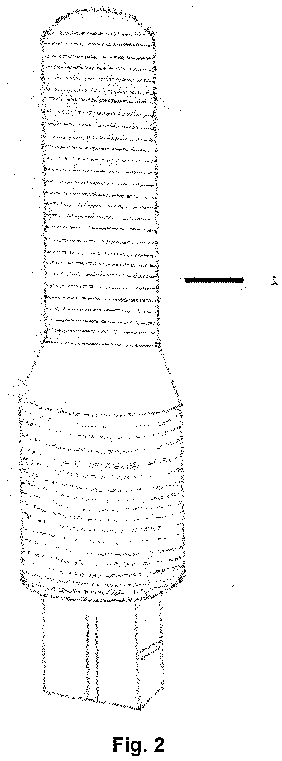

In relation to figure 2, it shows the implant or prosthetic attachment of the invention which is formed by a cylindrical body, the clamping screw (1) with a flat tip and provided with a millimetric thread in the upper part followed by a widening that will serve for the protection of the external cortical of the crestal zone continuing with millimetric thread, and finally in the inferior end a cubic body with laser-marked vertical and horizontal markings that help to the proper placement of the Oroantral Prosthetic Attachment appears.

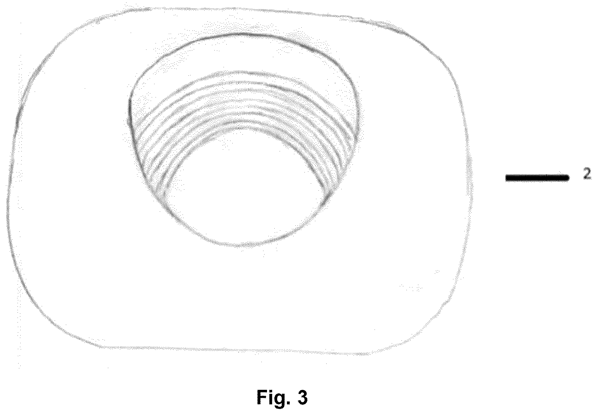

Regarding figure 3, it shows the anchor (2) which is provided with a hole that is assembled or threaded into the first cylindrical body, the anchor is provided inside the hole with a millimetric thread, and has a thread stop for the first cylindrical body to stop.

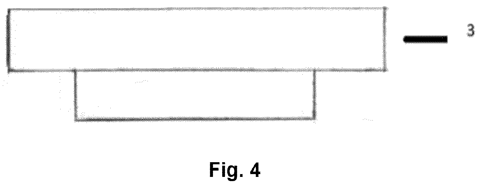

In relation to figure 4, it shows the clamping nut (3) which works to fasten and obtain a supreme anchorage to the bone, Which is assembled on the millimetric thread of the first cylindrical body, i.e. the clamping screw (1), then the widening that will serve for the protection of the external cortical of the crestal area.

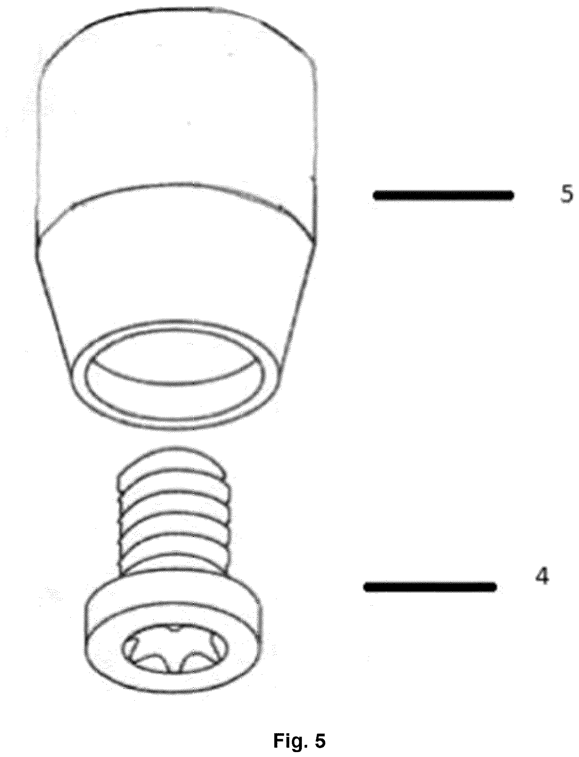

In relation to figure 5, the plug screw (4) and the truncated cone (5) are shown; the plug screw (4) has a cavity at the top and a threaded body, the truncated cone (5) or cap is provided with a hole which is assembled with the first plug screw (4), the truncated cone inside (5) is provided with a thread (not shown) capable of accommodating a threaded part of the first cylindrical body, i.e. of the clamping screw. The truncated cone (5) or cap is assembled on the lower end of the clamping screw (1) where it has a millimetric thread, and the cubic body with markings appears.

## Claims

1. Oroantral Prosthetic Attachment to be inserted in the remaining bone to anchor in the antral zone of the paranasal sinuses of a patient, **characterized in that** it comprises:
- a first cylindrical body, whose tip is flat provided with a millimetric thread in the upper part followed by a widening, continuing with a millimetric thread, and finally at the lower end a cubic body with vertical and horizontal markings appear.
- an anchor provided with a hole that is assembled or threaded into the first cylindrical body, and inside it is provided with a hole with millimetric thread, and has a thread stop for the first cylindrical body to stop.
- a clamping nut to fasten and obtain a supreme anchorage to the bone. Which is assembled on the millimetric thread of the first cylindrical body, i.e. the clamping screw after the widening.
- a plug screw and the truncated cone or cap; the plug screw has a cavity at the top and a threaded body, the truncated cone or cap is provided with a hole which is assembled with the first plug screw, and the inside of the truncated cone is provided with a thread capable of accommodating a threaded part of clamping screw. The truncated cone or cap is assembled on the lower end of the clamping screw where it has a millimetric thread, and the cubic body with markings appears.

2. Oroantral Prosthetic Attachment to be inserted in the remnant bone to anchor in the antral zone of the paranasal sinuses of a patient according to claim 1 is characterized because: the anchorage is done uniform and controlled causing a supreme anchorage to the remnant bone avoiding the implant to migrate to the paranasal sinuses and avoiding previous bone regeneration surgeries in the paranasal sinuses.
